# EUROPEAN PATENT SPECIFICATION

(11) **EP 4 569 263 B1**
(45) Date of publication and mention of the grant of the patent: **04.03.2026**
(21) Application number: 22786202.6
(22) Date of filing: 15.09.2022
(51) Int. Cl.: F21V 8/00, G02B 27/01

(54) **ETENDUE SQUEEZING IN OPTICAL SYSTEMS**
ETENDUE-QUETSCHUNG IN OPTISCHEN SYSTEMEN
COMPRESSION D'ÉTENDUE OPTIQUE DANS LES SYSTÈMES OPTIQUES

(43) Date of publication of application: 18.06.2025
(73) Proprietor: Google LLC, Mountain View, CA 94043 (US)
(72) Inventor: HOEKMAN, Thomas, Mountain View, California 94043 (US)
(74) Representative: Maikowski & Ninnemann Patentanwälte Partnerschaft mbB
(86) International application number: PCT/US2022/043583
(87) International publication number: WO 2024/058778

(56) References cited:
- WO-A1-2022/185306
- CN-A- 108 107 576
- US-A1- 2016 291 328

## Description

### BACKGROUND

Some head mounted display systems employ a waveguide combiner to combine light from a light engine for image display. These waveguide combiners should be thin to reduce weight and improve user experience. Meanwhile, miniaturization of light engines has been challenging, with exit pupils as wide as 4 mm being very common. Due to conservation of etendue, this leads to an intrinsic limit on the efficiency of the waveguide combiner, and by extension an augmented reality (AR) or mixed reality (MR) head mounted display system. Simply speaking, in many diffractive waveguide AR or MR displays, the light engine ray bundle does not fit in the waveguide and a large number of rays will fail to couple as a result.

Conservation of etendue, a fundamental law related to the second law of thermodynamics, states that the phase space volume of a ray bundle cannot decrease without loss of flux. While it is common to think of etendue conservation only in terms of area and solid angle, it is in fact a quantity with much higher dimensionality. More generally, the etendue of a system is conserved per color channel and per polarization. If dilution occurs in polarization or wavelength space, then, theoretically, the space-bandwidth product can be reduced.

One method of coupling light into the waveguide combiner is through the use of an in-coupler grating, such as a binary grating. To improve efficiency, the grating can be blazed or slanted, and perhaps even metalized. However, these approaches do not solve the fundamental issue of conservation of etendue. Regardless of how efficient the grating is, if the quality of an image is to be preserved, there is an upper bound on the coupling efficiency related to the ratio of waveguide thickness and exit pupil height.

To understand the problem at the level of a single ray path, a more efficient grating might at first appear to lead to a more efficient system, but this grating will also be much more efficient at diffracting a guided total internal reflection ray back towards to the light engine in a "multibounce" event. Traditional approaches that focus on the grating design therefore do not solve the etendue problem. As a result, the only known methods to improve the coupling efficiency once the in-coupler grating structure is optimized are to increase the thickness of the waveguide or reduce the exit pupil size of the light engine. However, these methods result in increased product weight and decreased light engine efficiency, respectively, which are both particularly undesirable in head mounted displays.

CN 108 107 576 A discloses a waveguide display device which comprises an image source, a projection optical system, an input coupler, a waveguide and an output coupler, wherein the image source is used to display an image; the projection optical system is used for projecting the image displayed by the image source to the input coupler; the input coupler is used for coupling emergent light of the projection optical system in the waveguide; and the output coupler is used for coupling light propagated in the waveguide out. The waveguide display device also comprises a quarter-wave plate and a reflector arranged on the surface of the waveguide. The grating coupling efficiency can be improved, the uniformity of the field of view of the displayed image is improved, and the overall energy utilization rate of the system is improved.

### SUMMARY

A claimed solution is specified by a head mounted display (HMD) device according to claim 1 and by a method according to claim 13. Dependent claims specify embodiments thereof.

### BRIEF DESCRIPTION OF THE DRAWINGS

The present disclosure may be better understood, and its numerous features and advantages made apparent to those skilled in the art by referencing the accompanying drawings. The use of the same reference symbols in different drawings indicates similar or identical items.
FIG. 1 shows an example display system having a support structure that houses a laser projection system configured to project images toward the eye of a user, in accordance with some embodiments.
FIG. 2 shows a block diagram of a laser projection system that projects laser light representing images onto the eye of a user via a display system, such as the display system of FIG. 1, in accordance with some embodiments.
FIG. 3 shows an example of light propagation within a waveguide of a laser projection system, such as the laser projection system of FIG. 2, in accordance with some embodiments.
FIG. 4 shows an example of an incoupler configuration not covered by the claims.
FIG. 5 shows an example of an incoupler configuration for etendue squeezing in accordance with some embodiments useful for carrying out the present invention that substantially reduces inefficiencies in extracted flux compared to the incoupler configuration of FIG. 4.
FIG. 6 shows an example of a stacked incoupler configuration in accordance with some embodiments useful for carrying out the present invention.
FIG. 7 shows an example of an incoupler configuration using a birefringent waveplate in accordance with some embodiments useful for carrying out the present invention.
FIG. 8 shows an example method for etendue squeezing in accordance with some embodiments of the present invention.

### DETAILED DESCRIPTION

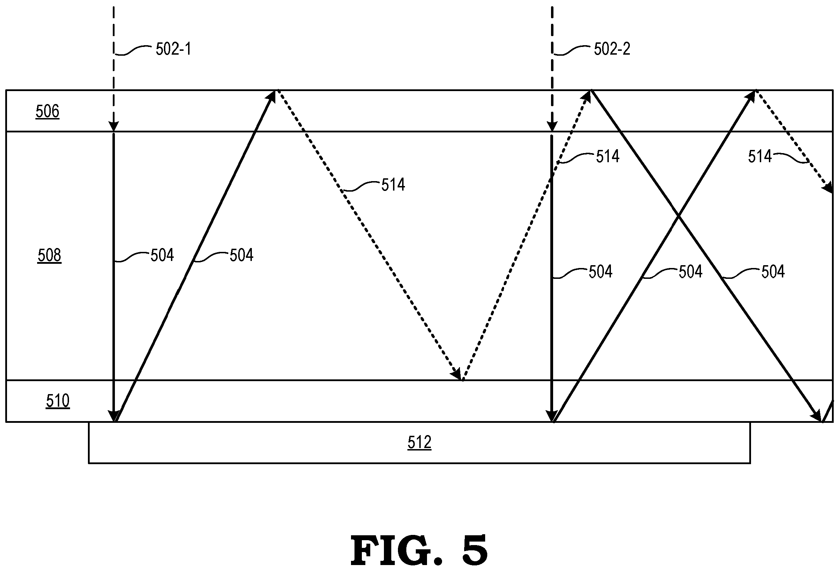

FIGS. 5 - 8 illustrate techniques for implementing etendue squeezing in optical systems that enable improvements in system efficiency and reductions in power constraints, and thus enable longer battery life and/or smaller battery size. Using aspects of the present disclosure, efficiency of optical systems such as head mounted display (HMD) devices can thus be increased to allow for lighter weight devices and/or devices that require fewer charges between uses.

To illustrate, in some embodiments, a first optical element in an incoupler configuration for a waveguide, used in HMD devices in some embodiments, converts a polarization state of light from a light source. After the light passes through the first optical element, a second optical element selectively reflects or transmits light transmitted by the first optical element based on a polarization state of the light transmitted by the first optical element. After the light passes through the second optical element, an incoupler directs light transmitted by the second optical element into a waveguide. Subsequently, as the light is guided through the waveguide in total internal reflection (TIR), passes through the first optical element, and then is reflected back through the first optical element, the first optical element converts a polarization state of the light directed into the waveguide by the incoupler such that the second optical element selectively reflects the light directed into the waveguide by the incoupler.

In this way, a "multibounce" effect can be minimized, where rays directed into incoupler configurations often interact with, e.g., an incoupler grating multiple times before being passed into the waveguide beyond the location of the incoupler and, as a consequence of interacting with the incoupler multiple times, experience an extraction event where the incoupler refracts light out of the waveguide, thus reducing the efficiency of the system. However, in some embodiments where a second ray interacts with the incoupler at a location spaced from a location where a first ray interacts with the incoupler, there will be mixed polarization states for the same field angle. As such, in some implementations, the polarization state of light transmitted through the waveguide substrate will be mixed. In this way, in some embodiments, polarization state purity is exchanged for reduced space-bandwidth product, thus effectively squeezing etendue and increasing efficiency.

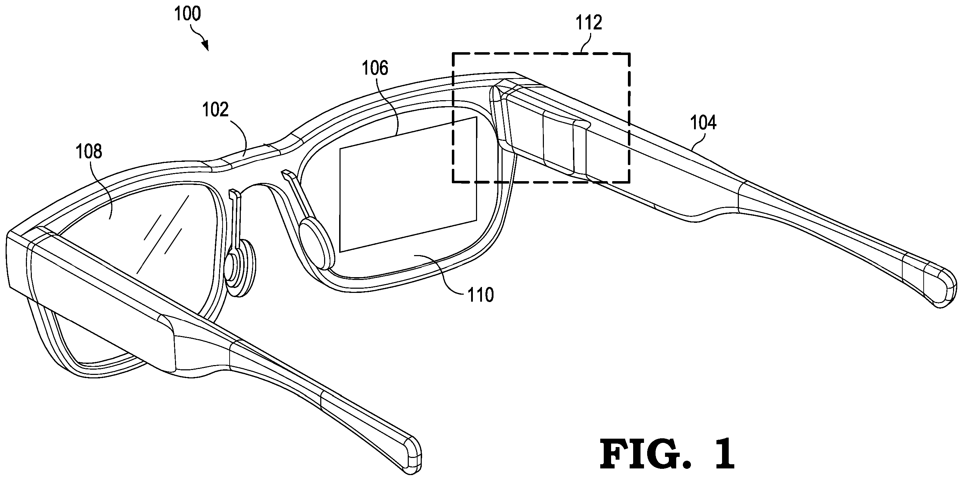

Before describing the specific features of etendue squeezing in an optical system, the descriptions of FIGS. 1-4 hereinbelow provide example embodiments and contexts in which etendue squeezing is realizable. Subsequently, FIGS. 5-8 describe particular examples and embodiments of etendue squeezing that, in some embodiments, are applied in the embodiments and contexts introduced in FIGS. 1-4.

FIG. 1 illustrates an example display system 100 having a support structure 102 that includes an arm 104, which houses a laser projection system configured to project images toward the eye of a user, such that the user perceives the projected images as being displayed in a field of view (FOV) area 106 of a display at one or both of lens elements 108, 110. In the depicted embodiment, the display system 100 is a wearable HMD that includes a support structure 102 configured to be worn on the head of a user and has a general shape and appearance of an eyeglasses frame. The support structure 102 contains or otherwise includes various components to facilitate the projection of such images toward the eye of the user, such as a laser projector, an optical scanner, and a waveguide. In some embodiments, the support structure 102 further includes various sensors, such as one or more front-facing cameras, rear-facing cameras, other light sensors, motion sensors, accelerometers, and the like. The support structure 102 further can include one or more radio frequency (RF) interfaces or other wireless interfaces, such as a Bluetooth (TM) interface, a WiFi interface, and the like. Further, in some embodiments, the support structure 102 includes one or more batteries or other portable power sources for supplying power to the electrical components of the display system 100. In some embodiments, some or all of these components of the display system 100 are fully or partially contained within an inner volume of support structure 102, such as within the arm 104 in region 112 of the support structure 102. In other embodiments, region 112 is alternatively or additionally included in the nose bridge of support structure 102. It should be noted that while an example form factor is depicted, it will be appreciated that in other embodiments the display system 100 will have a different shape and appearance from the eyeglasses frame depicted in FIG. 1.

One or both of the lens elements 108, 110 are used by the display system 100 to provide an augmented reality (AR) or mixed reality (MR) display, in which rendered graphical content can be superimposed over or otherwise provided in conjunction with a real-world view as perceived by the user through the lens elements 108, 110. For example, laser light used to form a perceptible image or series of images are projected by a laser projector of the display system 100 onto the eye of the user via a series of optical elements, such as a waveguide formed at least partially in the corresponding lens element, one or more scan mirrors, and one or more optical relays. One or both of the lens elements 108, 110 thus include at least a portion of a waveguide that routes display light received by an incoupler, or multiple incouplers, of the waveguide to an outcoupler of the waveguide, which outputs the display light toward an eye of a user of the display system 100. The display light is modulated and projected onto the eye of the user such that the user perceives the display light as an image. In addition, each of the lens elements 108, 110 is sufficiently transparent to allow a user to see through the lens elements to provide a field of view of the user's real-world environment such that the image appears superimposed over at least a portion of the real-world environment.

In some embodiments, the projector is a matrix-based projector, a scanning laser projector, or any combination of a modulative light source such as a laser or one or more LEDs and a dynamic reflector mechanism such as one or more dynamic scanners or digital light processors. In some embodiments, the projector includes multiple laser diodes (e.g., a red laser diode, a green laser diode, and/or a blue laser diode) and at least one scan mirror (e.g., two one-dimensional scan mirrors, which is a micro-electromechanical system (MEMS)-based or piezo-based), for example. The projector is communicatively coupled to the controller and a non-transitory processor-readable storage medium or memory storing processor-executable instructions and other data that, when executed by the controller, cause the controller to control the operation of the projector. In some embodiments, the controller controls a scan area size and scan area location for the projector and is communicatively coupled to a processor (not shown) that generates content to be displayed at the display system 100. The projector scans light over a variable area, designated the FOV area 106, of the display system 100. The scan area size corresponds to the size of the FOV area 106, and the scan area location corresponds to a region of one of the lens elements 108, 110 at which the FOV area 106 is visible to the user. Generally, it is desirable for a display to have a wide FOV to accommodate the outcoupling of light across a wide range of angles. In some embodiments, the projector routes light via first and second scan mirrors, an optical relay disposed between the first and second scan mirrors, and a waveguide disposed at the output of the second scan mirror.

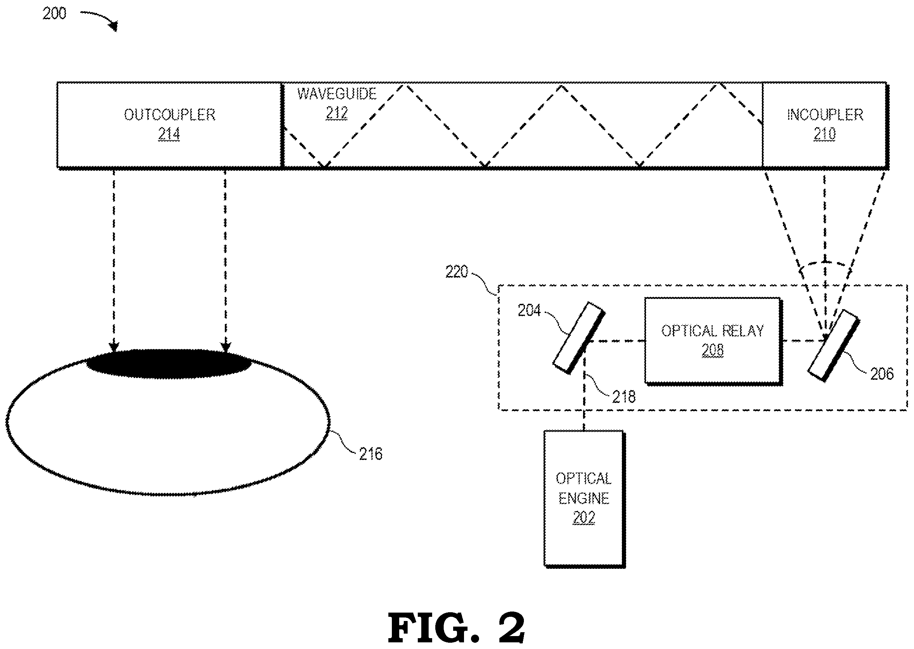

FIG. 2 illustrates a block diagram of a laser projection system 200 that projects laser light representing images onto the eye 216 of a user via a waveguide, such as that illustrated in FIG. 1. The laser projection system 200 includes an optical engine 202, an optical scanner 220, and a waveguide 212. In some embodiments, the laser projection system 200 is implemented in a wearable heads-up display or other display systems.

In some embodiments, the optical engine 202 includes one or more laser light sources configured to generate and output laser light (e.g., visible laser light such as red, blue, and green laser light and/or non-visible laser light such as infrared laser light). In some embodiments, the optical engine 202 includes a laser beam scanning light engine or a liquid crystal on silicon light engine. In some embodiments, the optical engine 202 is coupled to a controller or driver (not shown), which controls the timing of emission of laser light from the laser light sources of the optical engine 202 (e.g., in accordance with instructions received by the controller or driver from a computer processor coupled thereto) to modulate the laser light 218 to be perceived as images when output to the retina of the eye 216 of the user.

The optical scanner 220 includes a first scan mirror 204, a second scan mirror 206, and an optical relay 208. One or both of the scan mirrors 204 and 206 are MEMS mirrors, in some embodiments. For example, the scan mirror 204 and the scan mirror 206 are MEMS mirrors that are driven by respective actuation voltages to oscillate during active operation of the laser projection system 200, causing the scan mirrors 204 and 206 to scan the laser light 218. Oscillation of the scan mirror 204 causes laser light 218 output by the optical engine 202 to be scanned through the optical relay 208 and across a surface of the second scan mirror 206. The second scan mirror 206 scans the laser light 218 received from the scan mirror 204 toward an incoupler 210 of the waveguide 212. In some embodiments, the scan mirror 204 oscillates along a first scanning axis, such that the laser light 218 is scanned in only one dimension (i.e., in a line) across the surface of the second scan mirror 206. In some embodiments, the scan mirror 206 oscillates along a second scan axis that is perpendicular to the first scan axis.

The waveguide 212 of the laser projection system 200 includes the incoupler 210 and the outcoupler 214. The term "waveguide," as used herein, will be understood to mean a combiner using TIR, or via a combination of TIR, specialized filters, and/or reflective surfaces, to transfer light from an incoupler to an outcoupler. For display applications, the light is a collimated image, for example, and the waveguide transfers and replicates the collimated image to the eye. In general, the terms "incoupler" and "outcoupler" will be understood to refer to any type of optical grating structure, including, but not limited to, diffraction gratings, slanted gratings, blazed gratings, holograms, holographic optical elements (e.g., optical elements using one or more holograms), volume diffraction gratings, volume holograms, surface relief diffraction gratings, and/or surface relief holograms. In some embodiments, the incoupler includes one or more facets or reflective surfaces. In some embodiments, a given incoupler or outcoupler is configured as a transmissive diffraction grating that causes the incoupler or outcoupler to transmit light and to apply designed optical function(s) to the light during the transmission. In some embodiments, a given incoupler or outcoupler is a reflective diffraction grating that causes the incoupler or outcoupler to reflect light and to apply designed optical function(s) to the light during the reflection. In the present example, the laser light 218 received at the incoupler 210 is relayed to the outcoupler 214 via the waveguide 212 using TIR. The laser light 218 is then output to the eye 216 of a user via the outcoupler 214. In some embodiments, the waveguide 212 is formed by a plurality of layers, e.g., a first substrate layer, a partition element layer, and a second substrate layer.

In some embodiments, the incoupler 210 is a substantially rectangular feature configured to receive the laser light 218 and direct the laser light 218 into the waveguide 212. In some embodiments, the incoupler 210 is defined by a small dimension (i.e., width) and a long dimension (i.e., length). In an embodiment, the optical relay 208 is a line-scan optical relay that receives the laser light 218 scanned in a first dimension by the first scan mirror (e.g., the first dimension corresponding to the small dimension of the incoupler 210), routes the laser light 218 to the second scan mirror 206, and introduces a convergence to the laser light 218 in the first dimension. The second scan mirror 206 receives the converging laser light 218 and scans the laser light 218 in a second dimension, the second dimension corresponding to the long dimension of the incoupler 210 of the waveguide 212. The second scan mirror causes the laser light 218 to converge to a focal line along the second dimension. In some embodiments, the incoupler 210 is positioned at or near the focal line downstream from the second scan mirror 206 such that the second scan mirror 206 scans the laser light 218 as a line over the incoupler 210.

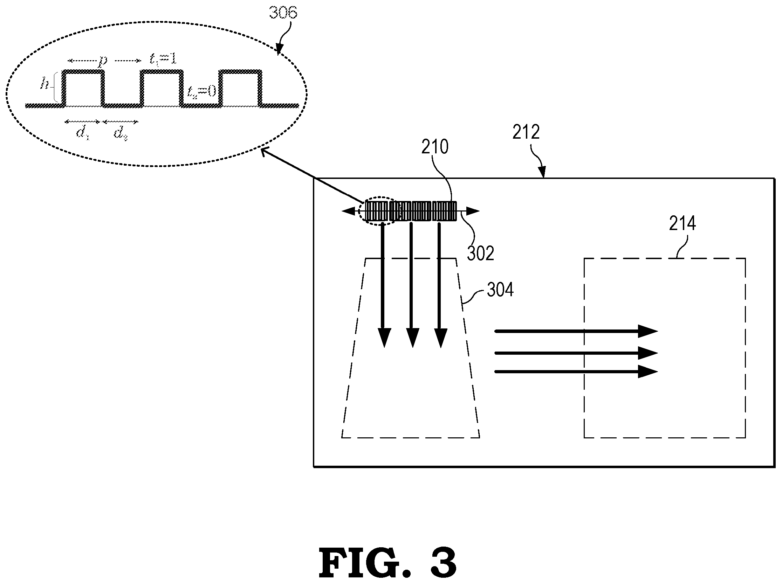

FIG. 3 shows an example of light propagation within the waveguide 212 of the laser projection system 200 of FIG. 2. As shown, light is received via the incoupler 210, scanned along the axis 302, directed into an exit pupil expander (EPE) 304, and then routed to the outcoupler 214 to be output from the waveguide 212 (e.g., toward the eye of the user). In some embodiments, EPE 304 expands one or more dimensions of the eyebox of an HMD that includes the laser projection system 200 (e.g., with respect to what the dimensions of the eyebox of the HMD would be without the EPE 304). In some embodiments, the incoupler 210 and the EPE 304 each include respective one-dimensional diffraction gratings (i.e., diffraction gratings that extend along one dimension). It should be understood that FIG. 3 shows a substantially ideal case in which the incoupler 210 directs light straight down (with respect to the presently illustrated view) in a first direction that is perpendicular to the scanning axis 302, and the EPE 304 directs light to the right (with respect to the presently illustrated view) in a second direction that is perpendicular to the first direction. While not shown in the present example, it should be understood that, in some embodiments, the first direction in which the incoupler 210 directs light is slightly or substantially diagonal, rather than exactly perpendicular, with respect to the scanning axis 302.

Also shown in FIG. 3 is a cross-section 306 of the incoupler 210 illustrating features of the grating that can be configured to tune the efficiency of the incoupler 210. The period p of the grating is shown having two regions, with transmittances t1=1 and *t*2=0 and widths d1 and d2, respectively. The grating period is constant *p=d*1*+d2,* but the relative widths d1, d2 of the two regions may vary. A fill factor parameter x can be defined such that *d1=xp* and *d2=*(1*-x*)*p.* In addition, while the profile shape of the grating features in cross-section 306 is generally shown as being square or rectangular with a height h, the shape can be modified based on the wavelength of light that the incoupler 210 is intended to receive. For example, in some embodiments, the shape of the grating features is triangular, rather than square, to create a more "saw-toothed" profile. In some embodiments, the incoupler 210 is configured as a grating with a constant period but different fill factors, heights, and slant angles based on the desired efficiency of the respective incoupler 210 or the desired efficiency of a region of the respective incoupler 210.

In some embodiments, the EPE 304 and the outcoupler 214 are separated into or onto separate sections of a waveguide. For example, the incoupler 210 and the EPE 304 are located in or on a first section and the outcoupler 214 is located in or on a second section, where a planar direction of the first section is substantially parallel to a planar direction of the second section. In some embodiments, the incoupler 210 and the EPE 304 are located in or on a first substrate and the outcoupler 214 is located in or on a second substrate, where the first substrate and the second substrate are arranged adjacent to one another in the manners described herein.

In some embodiments, the waveguide 212 includes multiple substrates with the EPE 304 located in or on a first substrate and the outcoupler 214 located in or on a second substrate that is separate from and adjacent to the first substrate. In some embodiments, a partition element is placed in between the first substrate and the second substrate. For example, the partition element is an airgap (or other gas-filled gap), a low-index refractive material layer, a polarizing beam splitter layer, or any combination thereof. In some embodiments, the partition element includes additional elements or an opening to direct light from the first substrate to the second substrate.

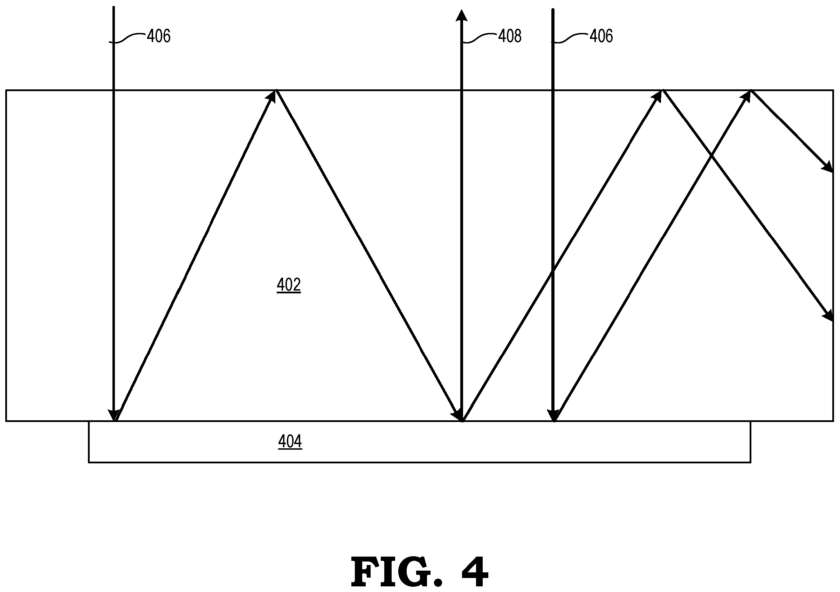

FIG. 4 shows an example of an incoupler configuration including a waveguide 402 and incoupler grating 404 that illustrates inefficiencies in extracted flux. As shown in FIG. 4, when light 406 is transmitted into the waveguide 402 and is refracted by the incoupler grating 404, a "multibounce" effect often results in lost power for thin waveguides (e.g., waveguides with a large ratio of image width to waveguide thickness). The "multibounce" effect diffracts the -1 order 408 of the light 406 at the incoupler grating (i.e., the "multibounce" effect causes an extraction event) when the light 406 is refracted by the incoupler grating 404 a second time, which results in undesirable loss of coupled power into the waveguide 402.

FIG. 5 shows an example of an incoupler configuration in accordance with some embodiments useful for carrying out the present invention that substantially reduces inefficiencies in extracted flux that may otherwise occur using an incoupler configuration like that shown in FIG. 4. As shown in FIG. 5, in some embodiments, two circularly polarized incident rays 502-1 and 502-2 are converted to linearly polarized rays 504 after passing through a quarter-wave plate 506 on a top surface of a waveguide substrate 508. However, in other embodiments, different polarizations are used. For example, in some embodiments, rather than converting circularly polarized incident rays to linearly polarized rays, linearly polarized incident rays are converted to circularly polarized rays. Those of ordinary skill in the art will understand after reviewing the present application in its entirety that a number of pure or mixed polarization states are possible for the incident and subsequent rays. Notably, in this example, vertical in-coupling is used (as opposed to edge- or butt-coupling). In this example, this linear polarization state is aligned with the transmission axis of a polarization selective reflector 510 (e.g., an advanced polarizer conversion film or dual brightness enhancement film) on the bottom surface of the waveguide substrate 508. After transmitting through the reflector 510, the rays 504 encounter an incoupler grating 512 and are diffracted into the +1 guided mode.

Unlike the incoupler configuration shown in FIG. 4, in the example of FIG. 5, the linearly polarized rays 504 are converted to orthogonal linearly polarized rays 514 by passing through the quarter-wave plate 506 twice, and therefore are reflected at the reflector 510. Using the example embodiment shown in FIG. 5, total system efficiency in terms of total extracted flux by the incoupler configuration is approximately doubled compared to the incoupler configuration of FIG. 4. Accordingly, aspects of the present disclosure enable improvements in system efficiency and reductions in power constraints, and thus enable longer battery life and/or smaller battery size. However, in some embodiments where a second ray, such as ray 502-2, is refracted by the incoupler grating 512 at a location spaced from a location where a first ray, such as 502-1, is refracted by the incoupler grating 512, there will be mixed polarization states for the same field angle, as shown at the right-hand side of FIG. 5 where a linearly polarized ray 504 and an orthogonal linearly polarized ray 514 are transmitted through the waveguide substrate 508 at the same location along the waveguide substrate 508. As such, in some implementations, the polarization state of light transmitted through the waveguide substrate 508 will be mixed.

Accordingly, using aspects of the example incoupler configuration of FIG. 5, a HMD device according to the claimed invention that substantially reduces inefficiencies in extracted flux that may otherwise occur using an incoupler configuration like that shown in FIG. 4 is realizable. In some embodiments, such a HMD device includes a light source, such as the optical engine 202 of FIG. 2, and an upper optical element, such as the quarter-wave plate 506, designed and configured to convert a polarization state of light from the light source. In some embodiments, the waveplate retardance and rotation angle is configured for specific implementations depending on its field of view and global orientation. In some embodiments, the performance of the waveplate is tuned to increase the coupling efficiency of specific modes or wavelengths that are low yield in the waveguide combiner. For example, in some embodiments, the waveplate efficiency is configured for increased efficiency for red light (for which incouplers are often the least efficient) and/or for high kz mode light that interacts with the incoupler grating 512 multiple times. In some embodiments, the upper optical element (e.g., the quarter-wave plate 506) is a birefringent crystal, a subwavelength grating, another nanostructure, or any other material or surface operable to rotate the polarization state of incoming rays. In some embodiments, the upper optical element is configured for a particular target white point and field of view of the display. In some embodiments, a polarizer is disposed between the light source and the upper optical element to optimize the polarization state of the incoming rays.

In some embodiments, such a HMD device further includes a lower optical element, such as the polarization selective reflector 510, designed and configured to selectively reflect or transmit light transmitted by the upper optical element, such as the quarter-wave plate 506, based on a polarization state of the light transmitted by the upper optical element. In some embodiments, the reflector 510 is a reflective polarizer, a reflective wire grid polarizer, or a diffractive layer optimized for polarization selectivity. As shown in FIG. 5, in some embodiments, the reflector 510 is positioned between the waveguide substrate 508 and the incoupler grating 512.

In some embodiments, such a HMD device further includes a first incoupler, such as the incoupler grating 512, designed and configured to direct light transmitted by the lower optical element, such as the reflector 510, into a waveguide, such as the waveguide substrate 508. In some embodiments, the first incoupler is an incoupler grating nano-imprinted on the reflector 510, such as a binary grating. In some embodiments, the grating is blazed, slanted, or metalized. In some embodiments, the grating is imprinted on the lower optical element, such as the reflector 510. In some embodiments, the first incoupler comprises an array of reflective microprisms or another geometric incoupler.

In order to minimize the "multibounce" effect described above, the upper optical element, such as the quarter-wave plate 506, is further designed and configured to convert a polarization state of light directed into the waveguide by the first incoupler, such as the incoupler grating 512, such that the light directed into the waveguide, such as the waveguide substrate 508, by the first incoupler is selectively reflected by the lower optical element, as shown in FIG. 5.

In some embodiments, the waveguide comprises an optical substrate, such as the waveguide substrate 508, positioned between the upper optical element, such as the quarter-wave plate 506, and the lower optical element, such as the reflector 510. In some embodiments, the upper optical element, such as the quarter-wave plate 506, is laminated, imprinted, grown, or etched onto the optical substrate, such as the waveguide substrate 508. In some embodiments, such as embodiments utilizing a non-metallized incoupler grating 512, an additional reflective polarizer (not shown) is added, e.g., in air, below the incoupler grating 512, allowing the transmitted 0th order to be redirected into the incoupler grating 512 to have a second chance at incoupling.

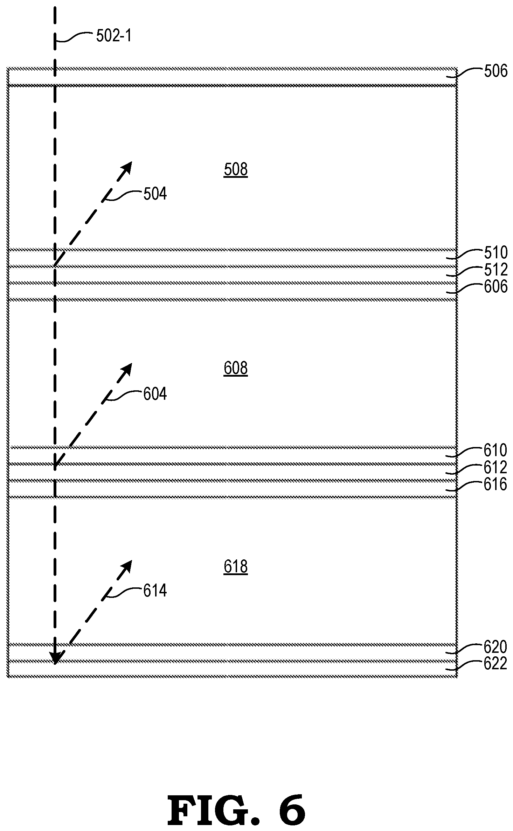

FIG. 6 shows an example of a stacked incoupler configuration in accordance with some embodiments. In some embodiments, a reflector such as reflector 510 of FIG. 5 is designed to be wavelength selective in a R+G+B or R+GB multi-waveguide system. In contrast, in a single waveguide system, in some embodiments, the reflector 510 is a broadband polarization reflector. Accordingly, a HMD device in some embodiments includes a lower optical element, such as reflector 510, that is wavelength selective to enable a multi-waveguide system where each waveguide is tuned to selectively transmit red, green, blue, or some combination of red, green, and blue light. In some embodiments, the waveguides are additionally or alternatively tuned to transmit other wavelengths of light, such as infrared.

Accordingly, as shown in FIG. 6, a HMD device in some embodiments includes a second upper optical element 606, a second waveguide substrate 608, a second lower optical element 610, and a second incoupler 612 located below the first incoupler, such as incoupler grating 512, in addition to the components of FIG. 5, tuned to transmit a second wavelength or band of light 604 (e.g., blue) distinct from the rays 504 (e.g., red) transmitted through the upper waveguide, such as waveguide substrate 508. Further, as also shown in FIG. 6, a HMD device in some embodiments includes a third upper optical element 616, a third waveguide substrate 618, a third lower optical element 620, and a third incoupler 622 located below the second incoupler 612 tuned to transmit a third wavelength or band of light 614 (e.g., green) distinct from the rays 504 (e.g., red) transmitted through the upper waveguide, such as waveguide substrate 508, and the wavelength or band of light 604 (e.g., blue) transmitted through the middle, second waveguide substrate 608.

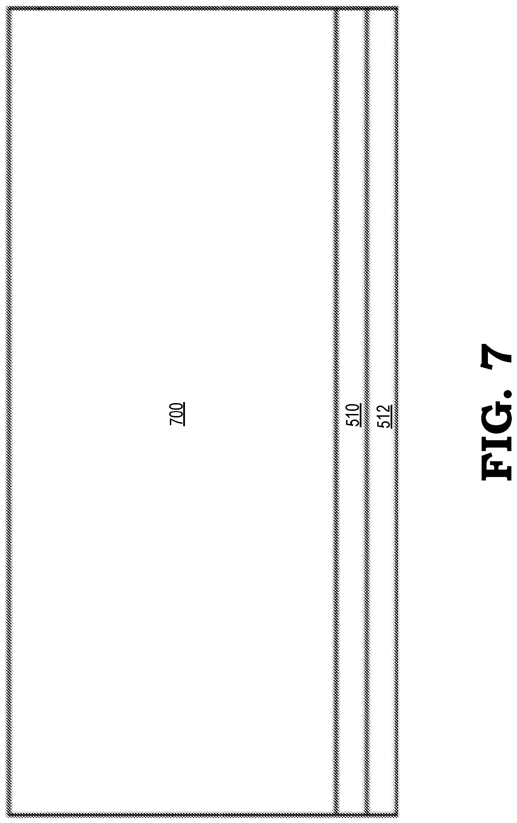

FIG. 7 shows an example of an incoupler configuration using a birefringent waveplate 700 in accordance with some embodiments useful for carrying out the present invention. In this example configuration, rather than using a quarter-wave plate 506 and waveguide substrate 508 like that of FIG. 5, a birefringent waveplate 700, such as a birefringent crystal, acts as the waveguide substrate and also functions equivalently to a quarter-wave plate due to its birefringent properties.

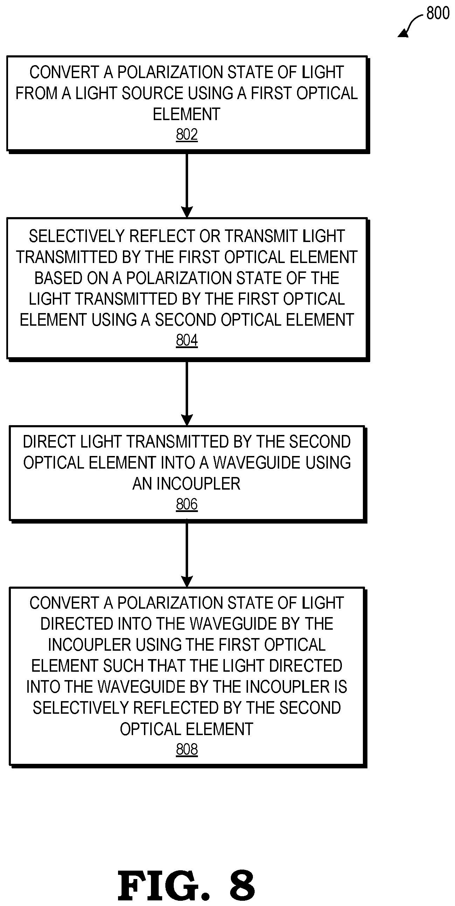

FIG. 8 shows an example method 800 for etendue squeezing in accordance with some embodiments in accordance with the present invention, which can be performed using one or more of the incoupler configurations of FIGS. 5-7. At block 802, a first optical element converts a polarization state of light from a light source. In some embodiments, the first optical element rotates the polarization state of the light from the light source. At block 804, a second optical element selectively reflects or transmits light transmitted by the first optical element based on a polarization state of the light transmitted by the first optical element. At block 806, an incoupler directs light transmitted by the second optical element into a waveguide. At block 808, the first optical element converts a polarization state of light directed into the waveguide by the incoupler such that the second optical element selectively reflects the light directed into the waveguide by the incoupler. In some embodiments, converting a polarization state of light directed into the waveguide by the incoupler using the first optical element includes converting the light directed into the waveguide by the incoupler to an orthogonal linearly polarized state using the first optical element.

In some embodiments, aspects of the present disclosure are directed to a head mounted display (HMD) device comprising: a light source; a first optical element configured to convert a polarization state of light from the light source; a second optical element configured to selectively reflect or transmit light transmitted by the first optical element based on a polarization state of the light transmitted by the first optical element; and a first incoupler configured to direct light transmitted by the second optical element into a waveguide, wherein the first optical element is further configured to convert a polarization state of light directed into the waveguide by the first incoupler such that the light directed into the waveguide by the first incoupler is selectively reflected by the second optical element. In some embodiments, the first optical element is a quarter-wave plate. In some embodiments, the first optical element is a birefringent crystal. In some embodiments, the first optical element is a subwavelength grating. In some embodiments, the second optical element is a reflective polarizer. In some embodiments, the second optical element is a reflective wire grid polarizer. In some embodiments, the second optical element is a diffractive layer configured for polarization selectivity. In some embodiments, the second optical element is wavelength selective. In some embodiments, the HMD device comprises a third optical element, a fourth optical element, and a second incoupler located below the first incoupler. In some embodiments, the first incoupler comprises a grating. In some embodiments, the grating is imprinted on the second optical element. In some embodiments, the first incoupler comprises an array of reflective microprisms. In some embodiments, the light source comprises a laser beam scanning light engine. In some embodiments, the light source comprises a liquid crystal on silicon light engine. In some embodiments, the waveguide comprises an optical substrate positioned between the first optical element and the second optical element. In some embodiments, the first optical element is laminated onto the optical substrate. In some embodiments, the first optical element is imprinted, grown, or etched on the optical substrate.

In some embodiments, aspects of the present disclosure are directed to a method, comprising: converting a polarization state of light from a light source using a first optical element; selectively reflecting or transmitting light transmitted by the first optical element based on a polarization state of the light transmitted by the first optical element using a second optical element; directing light transmitted by the second optical element into a waveguide using an incoupler; and converting a polarization state of light directed into the waveguide by the incoupler using the first optical element such that the light directed into the waveguide by the incoupler is selectively reflected by the second optical element. In some embodiments, the method includes rotating the polarization state of the light from the light source using the first optical element. In some embodiments, the method includes converting a polarization state of light directed into the waveguide by the incoupler using the first optical element comprises converting the light directed into the waveguide by the incoupler to an orthogonal linearly polarized state using the first optical element. The particular embodiments disclosed above are illustrative only, as the disclosed subject matter may be modified and practiced in different but equivalent manners apparent to those skilled in the art having the benefit of the teachings herein. No limitations are intended to the details of construction or design herein shown, other than as described in the claims below. It is therefore evident that the particular embodiments disclosed above may be altered or modified and all such variations are considered within the scope of the disclosed subject matter. Accordingly, the invention is as set forth in the claims below.

## Claims

1. A head mounted display, HMD, comprising:
a light source;
a first optical element configured to convert a polarization state of light from the light source;
a second optical element configured to selectively reflect or transmit light transmitted by the first optical element based on a polarization state of the light transmitted by the first optical element; and
a first incoupler (210; 512) configured to direct light transmitted by the second optical element into a waveguide (212; 402; 508) of the HMD,
wherein the first optical element is further configured to convert a polarization state of light directed into the waveguide (212; 402; 508) by the first incoupler (210; 512) such that the light directed into the waveguide (212; 402; 508) by the first incoupler (210; 512) is selectively reflected by the second optical element.

2. The HMD of claim 1, wherein the first optical element is a quarter-wave plate (506).

3. The HMD of claim 1, wherein the first optical element is a birefringent crystal (700).

4. The HMD of claim 1, wherein the first optical element is a subwavelength grating.

5. The HMD of claim 1, wherein the second optical element is a reflective polarizer.

6. The HMD of claim 1, wherein the second optical element is a reflective wire grid polarizer.

7. The HMD of claim 1, wherein the second optical element is a diffractive layer configured for polarization selectivity.

8. The HMD of any of the preceding claims, wherein the second optical element is wavelength selective.

9. The HMD of any of the preceding claims, wherein the HMD comprises a third optical element (616), a fourth optical element, and a second incoupler (612) located below the first incoupler (512).

10. The HMD of any of the preceding claims, wherein the first incoupler (210; 512) comprises a grating.

11. The HMD of claim 10, wherein the grating is imprinted on the second optical element.

12. The HMD of claim 1, wherein the first incoupler (210; 512) comprises an array of reflective microprisms.

13. A method, comprising:
converting a polarization state of light from a light source using a first optical element;
selectively reflecting or transmitting light transmitted by the first optical element based on a polarization state of the light transmitted by the first optical element using a second optical element;
directing light transmitted by the second optical element into a waveguide (212; 402; 508) using an incoupler (210; 512); and
converting a polarization state of light directed into the waveguide (212; 402; 508) by the incoupler (210; 512) using the first optical element such that the light directed into the waveguide (212; 402; 508) by the incoupler (210; 512) is selectively reflected by the second optical element.

14. The method of claim 13, further comprising rotating the polarization state of the light from the light source using the first optical element.

15. The method of claim 13 or 14, wherein converting a polarization state of light directed into the waveguide (212; 402; 508) by the incoupler (210; 512) using the first optical element comprises converting the light directed into the waveguide (212; 402; 508) by the incoupler (210; 512) to an orthogonal linearly polarized state using the first optical element.

## Patentansprüche

1. Kopfmontierte Anzeige (head mounted display, HMD), umfassend:
eine Lichtquelle;
ein erstes optisches Element, das dazu konfiguriert ist, einen Polarisationszustand des Lichts von der Lichtquelle umzuwandeln;
ein zweites optisches Element, das dazu konfiguriert ist, das durch das erste optische Element übertragene Licht selektiv zu reflektieren oder durchzulassen, basierend auf einem Polarisationszustand des durch das erste optische Element übertragenen Lichts; und
einen ersten Einkoppler (210; 512), der dazu konfiguriert ist, das durch das zweite optische Element übertragene Licht in einen Wellenleiter (212; 402; 508) der HMD zu leiten,
wobei das erste optische Element ferner dazu konfiguriert ist, einen Polarisationszustand von durch den ersten Einkoppler (210; 512) in den Wellenleiter (212; 402; 508) gerichtetem Licht umzuwandeln, sodass das durch den ersten Einkoppler (210; 512) in den Wellenleiter (212; 402; 508) gerichtete Licht selektiv durch das zweite optische Element reflektiert wird.

2. HMD nach Anspruch 1, wobei das erste optische Element eine Viertelwellenplatte (506) ist.

3. HMD nach Anspruch 1, wobei das erste optische Element ein doppelbrechender Kristall (700) ist.

4. HMD nach Anspruch 1, wobei das erste optische Element ein Teilwellenlängengitter ist.

5. HMD nach Anspruch 1, wobei das zweite optische Element ein reflektierender Polarisator ist.

6. HMD nach Anspruch 1, wobei das zweite optische Element ein reflektierender Drahtgitterpolarisator ist.

7. HMD nach Anspruch 1, wobei das zweite optische Element eine beugende Schicht ist, die zur Polarisationsselektivität konfiguriert ist.

8. HMD nach einem der vorhergehenden Ansprüche, wobei das zweite optische Element wellenlängenselektiv ist.

9. HMD nach einem der vorhergehenden Ansprüche, wobei das HMD ein drittes optisches Element (616), ein viertes optisches Element und einen zweiten Einkoppler (612), der sich unterhalb des ersten Einkopplers (512) befindet, umfasst.

10. HMD nach einem der vorhergehenden Ansprüche, wobei der erste Einkoppler (210; 512) ein Gitter umfasst.

11. HMD nach Anspruch 10, wobei das Gitter auf das zweite optische Element aufgedruckt ist.

12. HMD nach Anspruch 1, wobei der erste Einkoppler (210; 512) eine Anordnung von reflektierenden Mikroprismen umfasst.

13. Verfahren, umfassend:
Umwandeln eines Polarisationszustandes von Licht aus einer Lichtquelle unter Verwendung eines ersten optischen Elements;
selektives Reflektieren oder Durchlassen von Licht, das durch das erste optische Element übertragen wird, basierend auf einem Polarisationszustand des durch das erste optische Element übertragenen Lichts unter Verwendung eines zweiten optischen Elements;
Leiten des durch das zweite optische Element übertragenen Lichts in einen Wellenleiter (212; 402; 508) unter Verwendung eines Einkopplers (210; 512); und
Umwandeln eines Polarisationszustands von durch den Einkoppler (210; 512) in den Wellenleiter (212; 402; 508) gerichtetem Licht unter Verwendung des ersten optischen Elements, sodass das durch den Einkoppler (210; 512) in den Wellenleiter (212; 402; 508) gerichtete Licht selektiv durch das zweite optische Element reflektiert wird.

14. Verfahren nach Anspruch 13, ferner umfassend Drehen des Polarisationszustands des Lichts von der Lichtquelle unter Verwendung des ersten optischen Elements.

15. Verfahren nach Anspruch 13 oder 14, wobei das Umwandeln eines Polarisationszustandes von durch den Einkoppler (210; 512) in den Wellenleiter (212; 402; 508) gerichtetem Licht unter Verwendung des ersten optischen Elements das Umwandeln des durch den Einkoppler (210; 512) in den Wellenleiter (212; 402; 508) gerichteten Lichts in einen orthogonalen linear polarisierten Zustand unter Verwendung des ersten optischen Elements umfasst.

## Revendications

1. Visiocasque, HMD, comprenant :
une source de lumière ;
un premier élément optique configuré pour convertir un état de polarisation de la lumière provenant de la source de lumière ;
un deuxième élément optique configuré pour réfléchir ou transmettre sélectivement la lumière transmise par le premier élément optique sur la base d'un état de polarisation de la lumière transmise par le premier élément optique ; et
un premier coupleur d'entrée (210 ; 512) configuré pour diriger la lumière transmise par le deuxième élément optique dans un guide d'ondes (212 ; 402 ; 508) du HMD,
dans lequel le premier élément optique est également configuré pour convertir un état de polarisation de la lumière dirigée dans le guide d'ondes (212 ; 402 ; 508) par le premier coupleur d'entrée (210 ; 512) de telle sorte que la lumière dirigée dans le guide d'ondes (212 ; 402 ; 508) par le premier coupleur d'entrée (210 ; 512) est sélectivement réfléchie par le deuxième élément optique.

2. HMD selon la revendication 1, dans lequel le premier élément optique est une lame quart d'onde (506).

3. HMD selon la revendication 1, dans lequel le premier élément optique est un cristal biréfringent (700).

4. HMD selon la revendication 1, dans lequel le premier élément optique est un réseau de sous-longueur d'onde.

5. HMD selon la revendication 1, dans lequel le deuxième élément optique est un polariseur réfléchissant.

6. HMD selon la revendication 1, dans lequel le deuxième élément optique est un polariseur à grille métallique réfléchissant.

7. HMD selon la revendication 1, dans lequel le deuxième élément optique est une couche diffractive configurée pour une sélectivité de polarisation.

8. HMD selon l'une quelconque des revendications précédentes, dans lequel le deuxième élément optique est sélectif en longueur d'onde.

9. HMD selon l'une quelconque des revendications précédentes, dans lequel le HMD comprend un troisième élément optique (616), un quatrième élément optique, et un second coupleur d'entrée (612) situé sous le premier coupleur d'entrée (512).

10. HMD selon l'une quelconque des revendications précédentes, dans lequel le premier coupleur d'entrée (210 ; 512) comprend un réseau.

11. HMD selon la revendication 10, dans lequel le réseau est imprimé sur le deuxième élément optique.

12. HMD selon la revendication 1, dans lequel le premier coupleur d'entrée (210 ; 512) comprend un réseau de microprismes réfléchissants.

13. Procédé, comprenant :
la conversion d'un état de polarisation de la lumière provenant d'une source de lumière à l'aide d'un premier élément optique ;
la réflexion ou la transmission sélective de la lumière transmise par le premier élément optique sur la base d'un état de polarisation de la lumière transmise par le premier élément optique à l'aide d'un deuxième élément optique ;
la direction de la lumière transmise par le deuxième élément optique dans un guide d'ondes (212 ; 402 ; 508) à l'aide d'un coupleur d'entrée (210 ; 512) ; et
la conversion d'un état de polarisation de la lumière dirigée dans le guide d'ondes (212 ; 402 ; 508) par le coupleur d'entrée (210 ; 512) à l'aide du premier élément optique de telle sorte que la lumière dirigée dans le guide d'ondes (212 ; 402 ; 508) par le coupleur d'entrée (210 ; 512) est sélectivement réfléchie par le deuxième élément optique.

14. Procédé selon la revendication 13, comprenant également la rotation de l'état de polarisation de la lumière provenant de la source de lumière à l'aide du premier élément optique.

15. Procédé selon la revendication 13 ou 14, dans lequel la conversion d'un état de polarisation de la lumière dirigée dans le guide d'ondes (212 ; 402 ; 508) par le premier coupleur d'entrée (210 ; 512) à l'aide du premier élément optique comprend la conversion de la lumière dirigée dans le guide d'ondes (212 ; 402 ; 508) par le premier coupleur d'entrée (210 ; 512) en un état polarisé linéairement orthogonal à l'aide du premier élément optique.
